# EUROPEAN PATENT SPECIFICATION

(11) **EP 3 524 455 B1**
(45) Date of publication and mention of the grant of the patent: **30.12.2020**
(21) Application number: 19156128.1
(22) Date of filing: 08.02.2019
(51) Int. Cl.: B60H 1/34

(54) **AERATION DIFFUSER FOR VEHICLES**
BELÜFTUNGSDIFFUSOR FÜR FAHRZEUGE
DIFFUSEUR D'AIR POUR VÉHICULES

(30) Priority: 09.02.2018 IT 201800002534
(43) Date of publication of application: 14.08.2019
(73) Proprietor: Plastic Components and Modules Automotive S.p.A., 10137 Torino (TO) (IT)
(72) Inventor: GIACCARIA, Flavio, I-10093 COLLEGNO (Torino) (IT); IACOBONE, Pasquale, I-10142 TORINO (IT); PAROLA, Enrico, I-10071 BORGARO TORINESE (Torino) (IT)
(74) Representative: Savoca, Agatino

(56) References cited:
- EP-A1- 3 081 412
- JP-A- S6 186 529
- JP-A- 2002 137 628
- US-A- 5 690 550

## Description

### Technical field

The present invention relates to an aeration diffuser for vehicles.

### Background art

There are known diffusers for aerating vehicles, comprising an outer nozzle, located on the outlet section of an aeration duct, and a plurality of adjustable tabs, adapted to direct the flow of air outgoing from the nozzle.

Generally, the tabs are oriented by means of sliders or wheels, operated by the user. By moving the slider, the tabs rotate accordingly, keeping parallel to each other.

In this way, however, the flow of air is simply diverted, and cannot be concentrated or diffused, for example to change the user's perception of flow.

To adjust the degree of diffusion or concentration of the flow, it is necessary to converge or diverge the tabs, in such a way that, as the degree of divergence increases, the cone of diffusion of the air from the nozzle is widened.

A solution, in which the tabs can be oriented in a convergent/divergent manner, is known from publication EP 3 199 393 A1.

In this example, at the center of the diffuser there is a knob, projecting towards the outside of the nozzle. The knob is connected to a toothed wheel, located on the inner side of the nozzle, which engages a plurality of toothed rods, mutually perpendicular. Each pair of rods meshes the wheel symmetrically with respect to the axis of rotation of the latter, so that the rotation of the wheel, triggered by the user's actuation of the knob, causes a translation of the rods according to opposite directions.

Each rod controls the movement of one or more tabs, so that the concurrent sliding of the rods causes the reorientation of the tabs in a mutually convergent or divergent manner, according to the direction of rotation of the toothed wheel.

However, this configuration is difficult to apply, due to the numerous moving parts (which are structurally delicate), which must move in a confined space.

A further example of a diffuser according to the prior art, which for orientating the tabs, however, employs a slide, extended along a diameter of the nozzle and sliding along the axis of the latter, is known from document DE 20 2004 016 983 U1. The slide is driven by a rod, which can be moved along the axis of the nozzle, and has a plurality of slanted slits or slots, inside which pins integral with the tabs slide.

In this way, when the slide is in a distal position with respect to the nozzle, the pins are abutting against one end of the slot, and the tabs are arranged parallel to the flow of air which passes through the nozzle. On the other hand, when the slide is in a position proximal to the nozzle, the pins slide into the slot and abut against the opposite end of the slot, and the tabs incline diverging with respect to the air outflow direction. With this configuration, it is possible to concentrate or diffuse the air coming out of the nozzle.

However, this solution can be used to concentrate or diffuse the air outflow cone only partially, since it is designed to move a single group of tabs, but not the group of the rear tabs, perpendicular to the first ones. Therefore, the second group of tabs will always be oriented in a mutually parallel manner, and will not contribute to concentrating or diffusing the outgoing air, limiting itself to diverting its flow.

Furthermore, the axial travel of the slide (and, consequently, the angular excursion of the tabs) is limited by the length of the slanted slots. Therefore, in order to lengthen the stroke of the slide and increase the inclination of the tabs, it is necessary to increase the axial dimensions of the slide, which can cause interference problems between the mechanical components of the diffuser.

Further examples of diffusers are known from documents JP 2002 137628 A, US 5 690 550 A, EP 3 081 412 A1 and JP S61 86529 A.

### Summary of the invention

An object of the present invention is to provide an improved aeration diffuser for vehicles, which operates according to a different operating principle, with respect to the solutions of the prior art.

To obtain this result, there is provided an aeration diffuser for vehicles, as set out in independent claim 1, in which at the center of the nozzle there is placed, instead of the knob, an actuator which engages a slide to which connecting rods, in turn hinged to the tabs, are connected. The slide is configured to translate in response to the movement of the actuator, thereby dragging the connecting rods. In this way, when the slide approaches the nozzle, the connecting rods extend radially, pushing the tabs towards the periphery of the nozzle (thus obtaining a more concentrated flow).

On the other hand, the connecting rods are configured to align themselves with the longitudinal axis in response to the slide moving away from the nozzle, thereby directing the tabs towards this longitudinal axis, so that the tabs themselves assume a divergent configuration in the air outflow direction. An extension of the outflow cone is thus obtained, and therefore a greater diffusion of the air.

As will be better appreciated in the rest of the description, the actuator may be a threaded pin, which engages the slide, in such a way that the slide is configured to axially translate in response to the rotation of said threaded pin. According to another embodiment, the actuator may be for example a rod or knob, movable in the axial direction and connected to the slide, in such a way that the slide is configured to axially translate in response to the translation of the rod.

In this way, the architecture of the diffuser is simplified and strengthened, and there is a solution that smoothly and reliably allows regulating, in a gradual and perfectly controlled manner, the airflow cone from the nozzle.

The above and other objects and advantages are achieved, according to an aspect of the invention, by an aeration diffuser for vehicles having the features defined in claim 1. Preferred embodiments of the invention are defined in the dependent claims.

### Brief description of the drawings

The functional and structural features of some preferred embodiments of an aeration diffuser for vehicles according to the invention will now be described. Reference will be made to the accompanying drawings, in which:
- figure 1 is a schematic perspective view of an aeration diffuser, according to an embodiment of the present invention;

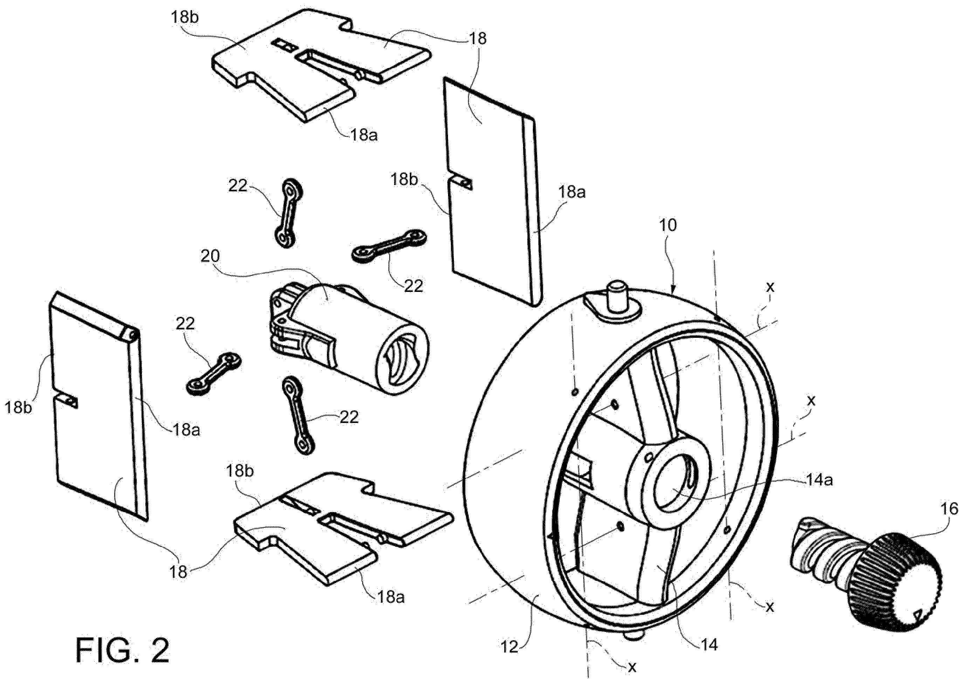

- figure 2 is a schematic exploded view of the diffuser in figure 1, in which the main components of the diffuser are visible, according to an embodiment of the invention;
- figures 3A-3C are respectively a rear perspective view of the diffuser in figure 1, a schematic rear view of said diffuser, and a schematic front view of said diffuser, in a configuration in which the slide is in a position proximal to the nozzle, and the connecting rods are extended in a radial direction, so that the tabs are positioned substantially perpendicular to each other (substantially axial flow);

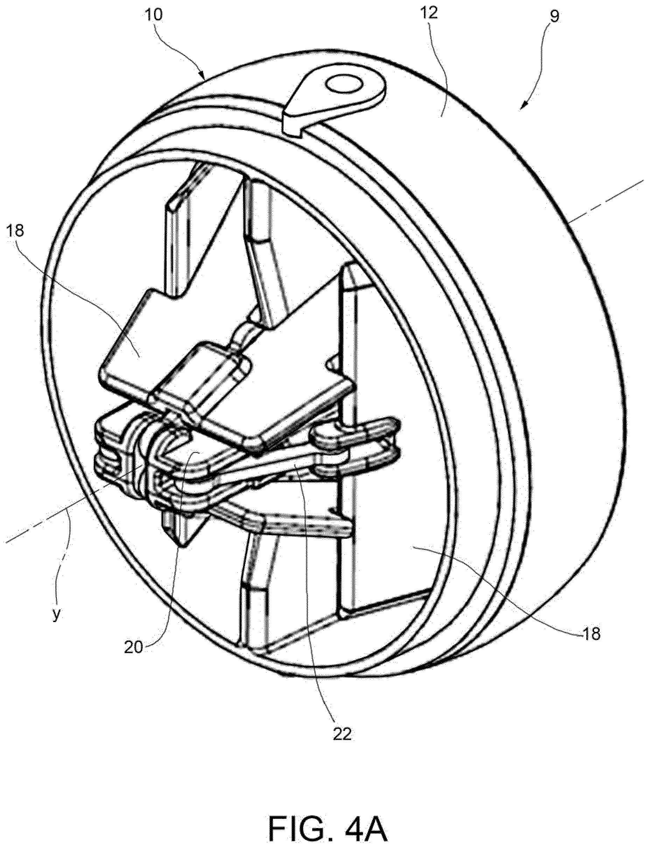

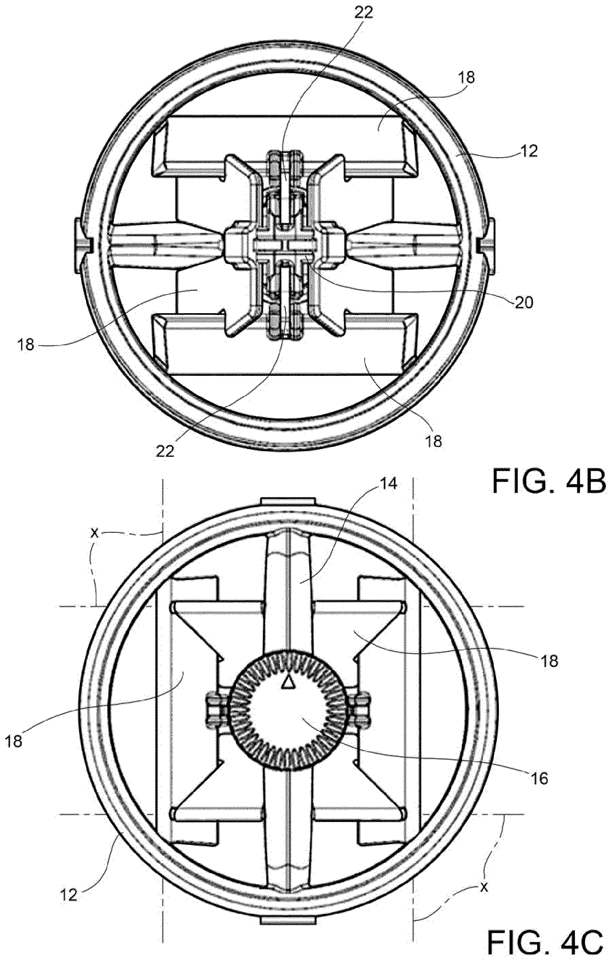

- figures 4A-4C are respectively a rear perspective view of the diffuser in figure 1, a schematic rear view of said diffuser, and a schematic front view of said diffuser, in a configuration in which the slide is in a position distal to the nozzle, and the connecting rods are bent in an axial direction, so that the tabs are positioned substantially diverging from each other, with respect to the air flow direction from the nozzle (diffuse flow);
- figures 5A-5B are respectively a schematic sectional view of the configuration illustrated in figures 3A-3C (axial flow), and a schematic sectional view of the configuration illustrated in figures 4A-4C (diffuse flow); and
- figure 6 is a schematic perspective view of an aeration diffuser, according to an embodiment of the present invention, wherein there are three directing tabs.

### Detailed description

Before explaining a plurality of embodiments of the invention in detail, it should be noted that the invention is not limited in its application to the construction details and to the configuration of the components presented in the following description or shown in the drawings. The invention can take other embodiments and be implemented or practically carried out in different ways. It should also be understood that the phraseology and terminology are for descriptive purpose and are not to be construed as limiting.

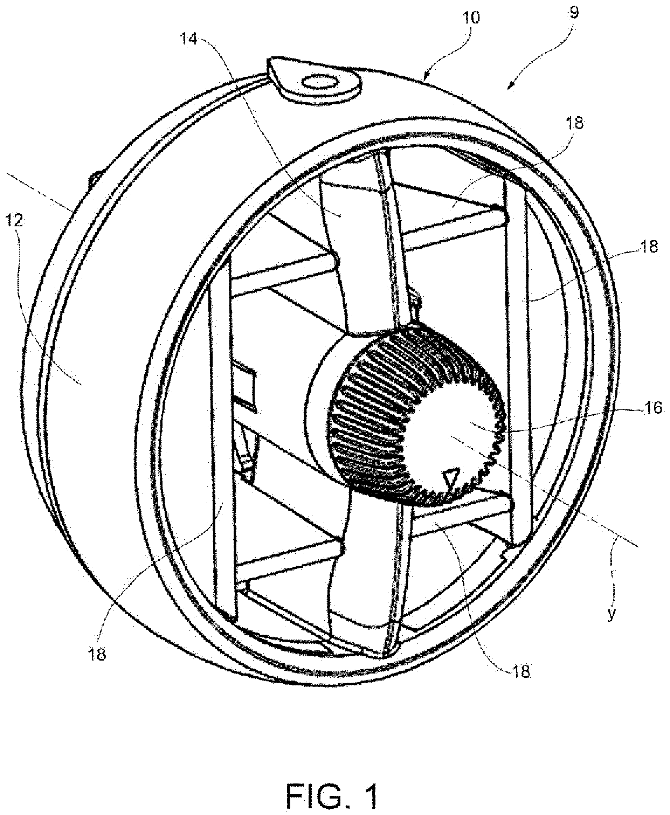

By way of an example referring to figure 1, an aeration diffuser 9 for vehicles, adapted to introduce and direct an air flow into the vehicle interior, comprises a nozzle 10, adapted to be mounted in the outlet section of an air supply duct of the vehicle.

The nozzle 10 comprises an outer frame 12, which identifies an air outlet section. An actuator 16 is positioned at the center of this outlet section, and is movable with respect to a longitudinal axis y, along which said actuator 16 extends.

Preferably, the nozzle 10 comprises at least one support element 14 formed within such an outer frame 12, which support element 14 movably supports the actuator 16.

According to a preferred embodiment, the outer frame 12 is circular in shape and even more preferably the support element 14 is an upright extending along a radius or a diameter of the outer frame 12.

Conveniently, on the at least one support element 14 there is a seat 14a, which houses the actuator 16.

The diffuser 9 also comprises a plurality of tabs 18, each tab 18 having a first edge 18a, near which such a tab 18 is hinged to the nozzle 10 along a respective oscillation axis x. The oscillation axes x of at least two tabs 18 are not parallel to each other, so that such tab 18 can assume a convergent or divergent configuration.

The diffuser 9 further comprises a slide 20, coaxial with respect to the longitudinal axis y of the actuator 16 and slidingly coupled to said actuator 16. The diffuser 9 is configured in such a way that the movement of the actuator 16 involves an axial translation of the slide 20 between a first position, proximal to the nozzle 10, and a second position, distal to the nozzle 10.
There are also a plurality of connecting rods 22, each having a first end movable integrally to the slide 20, and a second end hinged to a second edge 18b of a respective tab 18. The diffuser 9 is configured in such a way that the sliding of the slide 20 towards this first position of the slide 20 (proximal to the nozzle 10) causes the second edges 18b to move away from the longitudinal axis y of the slide 20, and for the slide 20 to slide towards said second position, distal with respect to the nozzle 10, causing an approach of the second edges 18b to the longitudinal axis y of the slide 20.

In other words, in the aforementioned first position of the slide 20 the connecting rods 22 extend in a radial direction (they therefore tend to be arranged perpendicularly to the longitudinal axis y), and the tabs 18 assume a convergent configuration in the air outflow direction. On the contrary, when the slide 20 slides towards the second position (distal with respect to the nozzle 10), there is an approach of the second edges 18b to the longitudinal axis y of the slide 20. The connecting rods 22 are therefore folded in an axial direction (they therefore tend to align themselves with the longitudinal axis y), and the tabs 18 assume a mutually divergent configuration in the air outflow direction.

In the first configuration, at the outlet of the nozzle 10 there will be an axial or concentrated flow direction, while in the second configuration there will be a divergent or diffused flow direction.
Throughout the present description and in the claims, the terms and expressions indicating positions and orientations, such as "longitudinal" or "radial", refer to the longitudinal axis y.

According to a preferred embodiment, the actuator 16 is a threaded pin which engages the slide 20, such that a rotation thereof about the longitudinal axis y causes an axial translation of the slide 20 along such a longitudinal axis y.
According to an embodiment not shown, the actuator 16 is a rod, tab or knob translatable along the longitudinal axis y and coupled to the slide 20, and configured such that a translation thereof along the longitudinal axis y causes an axial translation of the slide 20 along such a longitudinal axis y. Conveniently, the rod projects axially outwardly of the nozzle 10, so that a user can manipulate the rod and pull it outwards (or push it inwardly) of said nozzle 10. The movement of the rod drives the slide 20, which slides axially, orientating the tabs 18 through the connecting rods 22.

Conveniently, the diffuser positions can be defined by adjusting the movement of the rod by mechanical stops and/or by friction, depending on the case (for example, when it is desired to modulate the sliding resistance of the rod, to provide the user with a determined tactile sensation).

According to a preferred embodiment, the axial stroke of the slide 20 is between 4 mm and 8 mm, and more preferably is 6 mm.

Conveniently, the support element 14 can rotatably support the threaded pin, or can slidably support the rod, depending on the configuration of the actuator 16.

Conveniently, at least one tab 18 is hinged to the support element 14, formed inside the nozzle 10.

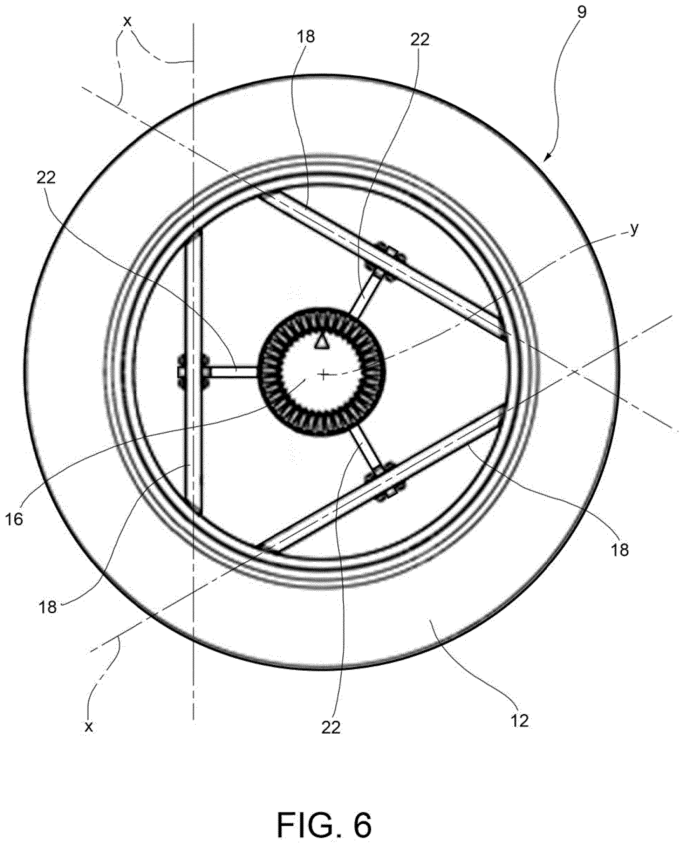

According to an embodiment, the plurality of tabs 18 is arranged so that at least two oscillating axes x mutually form an acute angle. For example, as shown in figure 6, there may be three tabs 18, arranged in such a way that the respective oscillation axes x substantially form a triangle.

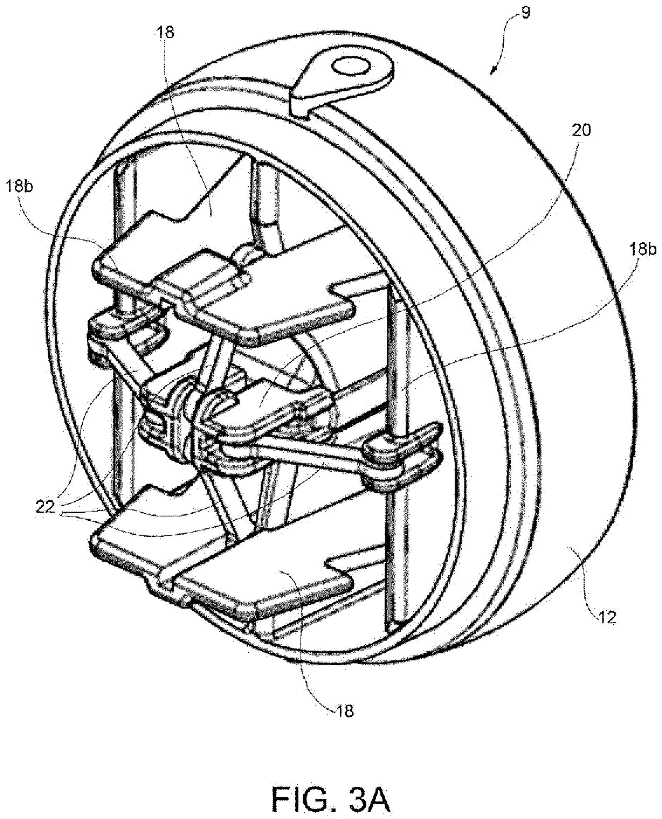

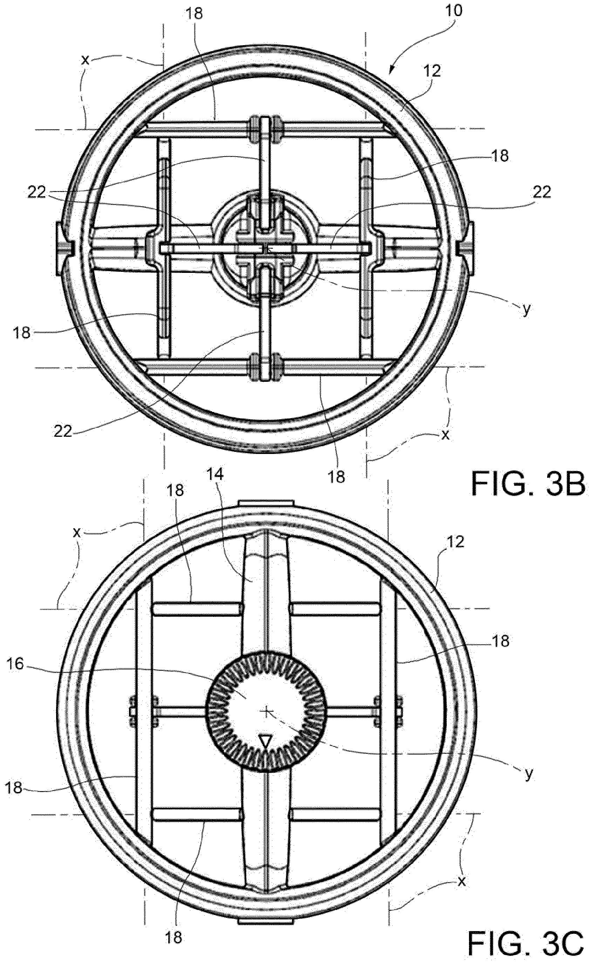

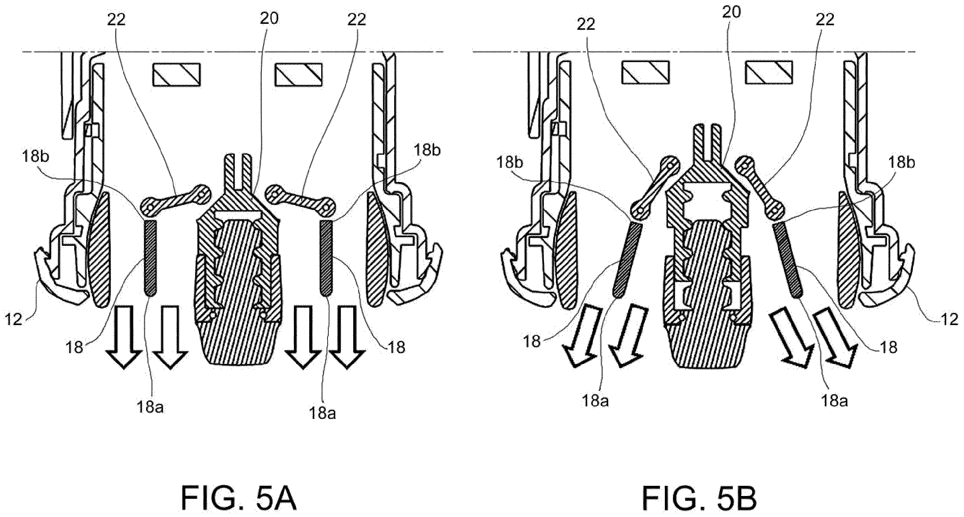

According to a preferred embodiment, there are two pairs of tabs 18, arranged so that the oscillation axes x of a same pair of tabs 18 are mutually parallel, and perpendicular to the oscillation axes x of the other pair of tabs 18 (by way of example, see figures 3A-3C and 5A).

According to a preferred embodiment, at least one pair of tabs 18 is hinged to the outer frame 12 of the nozzle 10.

According to further embodiments (not shown), the tabs 18 can assume other configurations, for example configurations in which the oscillation axes x are arranged in a pentagon, hexagon, etc. By way of example, similar configurations may recall the corolla of a flower, whose petals correspond to the tabs 18, which open and close (around the longitudinal axis y) towards the inside of the conduit that feeds the nozzle 10.

According to an embodiment (not shown), a single connecting rod 22 can control two or more radially consecutive tabs 18.

Various aspects and embodiments of an aeration diffuser according to the invention have been described. It is understood that each embodiment may be combined with any other embodiment. The invention, moreover, is not limited to the described embodiments, but may be varied within the scope defined by the appended claims.

## Claims

1. Aeration diffuser (9) for vehicles, adapted to introduce and direct an airflow into the passenger compartment of the vehicle, comprising:
- a nozzle (10), suitable for being mounted in the outflow section of an air supply duct, said nozzle (10) comprising an outer frame (12), which identifies an air outlet section;
- an actuator (16), positioned at the center of said air outlet section and movable with respect to a longitudinal axis (y);
- a plurality of tabs (18), each tab (18) having a first edge (18a) near which said tab (18) is hinged to the nozzle (10) along a respective oscillation axis (x), the oscillation axes (x) of at least two tabs (18) not being mutually parallel;
- a slide (20), coaxial with respect to the longitudinal axis (y) of the actuator (16) and slidably coupled to said actuator (16), in such a way that the slide (20) is configured to axially translate between a first position, proximal to the nozzle (10), and a second position, distal to the nozzle (10), in response to the movement of the actuator (16);
**characterized in that** it further comprises:
- a plurality of connecting rods (22), each having a first end integrally movable with the slide (20), and a second end hinged to a second edge (18b) of a respective tab (18), in such a way that the second edges (18b) are configured to move away from the longitudinal axis (y) of the slide (20) in response to the sliding of the slide (20) towards said first position, proximal to the nozzle (10), and that the second edges (18b) are configured to approach the longitudinal axis (y) of the slide (20) in response to the sliding of the slide (20) towards said second position, distal to the nozzle (10).

2. Diffuser according to claim 1, wherein the actuator (16) is a threaded pin which engages the slide (20), in such a way that the slide (20) is configured to axially translate along said longitudinal axis (y) in response to a rotation of the threaded pin about the longitudinal axis (y).

3. Diffuser according to claim 1, wherein the actuator (16) is a rod translatable along the longitudinal axis (y) and coupled to the slide (20), in such a way that the slide (20) is configured to axially translate along said longitudinal axis (y) in response to a translation of the rod along the longitudinal axis (y).

4. Diffuser according to claim 3, wherein the rod is configured in such a way that the movement thereof is adjusted by means of mechanical stops and/or by friction.

5. Diffuser according to any one of the preceding claims, wherein the nozzle (10) comprises at least one support element (14) formed within the outer frame (12), the at least one support element (14) movably supports the actuator (16) at the center of the nozzle (10).

6. Diffuser according to any one of the preceding claims, wherein the plurality of tabs (18) is arranged so that at least two oscillating axes (x) mutually form an acute angle.

7. Diffuser according to claim 6, comprising three tabs (18), arranged in such a way that the respective oscillation axes (x) substantially form a triangle.

8. Diffuser according to one of claims 1 to 5, comprising two pairs of tabs (18), arranged so that the oscillation axes (x) of a same pair of tabs (18) are mutually parallel, and perpendicular to the oscillation axes (x) of the other pair of tabs (18).

9. Diffuser according to any one of claims 5 to 8 as dependent on claim 5, wherein at least one pair of tabs (18) is hinged to the at least one support element (14), formed within the outer frame (12).

10. Diffuser according to any one of the preceding claims, wherein at least one pair of tabs (18) is hinged to the outer frame (12) of the nozzle (10).

11. Diffuser according to any one of claims 5 to 10 as dependent on claim 5, wherein the outer frame (12) is circular in shape, and the at least one support element (14) is an upright extending along a diameter of said outer frame (12).

12. Diffuser according to any one of the preceding claims, wherein a single connecting rod (22) can control two or more radially consecutive tabs (18).

13. Diffuser according to any one of the preceding claims, wherein the axial stroke of the slide (20) is between 4 mm and 8 mm, and more preferably is 6 mm.

## Patentansprüche

1. Belüftungsverteiler (9) für Fahrzeuge, der ausgebildet ist, einen Luftstrom in die Passagierkabine des Fahrzeugs einzuführen und zu lenken, mit:
- einer Düse (10), die geeignet ist, in dem Ausströmungsabschnitt einer Luftzuführleitung montiert zu werden, wobei die Düse (10) einen Außenrahmen (12) aufweist, der einen Luftauslassabschnitt kennzeichnet;
- einem Aktuator (16), der in der Mitte des Luftauslassabschnitts positioniert und in Bezug auf eine Längsachse (y) beweglich ist;
- mehreren Klappen (18), wobei jede Klappe (18) eine erste Kante (18a) aufweist, in deren Nähe die Klappe (18) mit der Düse (10) entlang einer entsprechenden Schwingachse (x) beweglich verbunden ist, wobei die Schwingachsen (x) mindestens zweier Klappen (18) nicht parallel zueinander sind;
- einem Gleitelement (20), das in Bezug auf die Längsachse (y) des Aktuators (16) koaxial ist und verschiebbar mit dem Aktuator (16) verbunden ist derart, dass das Gleitelement (20) ausgebildet ist, sich zwischen einer ersten Lage, die in der Nähe der Düse (10) liegt, und einer zweiten Lage, die von der Düse (10) entfernt ist, in Reaktion auf die Bewegung des Aktuators (16) zu verschieben;
**dadurch gekennzeichnet, dass** er ferner aufweist:
- mehrere Verbindungsstäbe (22), wovon jeder ein erstes Ende, das zusammen mit dem Gleitelement (20) beweglich ist, und ein zweites Ende hat, das mit einer zweiten Kante (18b) einer entsprechenden Klappe (18) beweglich verbunden ist derart, dass die zweiten Kanten (18b) ausgebildet sind, sich von der Längsachse (y) des Gleitelements (20) in Reaktion darauf wegzubewegen, dass das Gleitelement (20) in Richtung zu der ersten Lage, die in der Nähe der Düse (10) ist, gleitet, und dass die zweiten Kanten (18b) derart ausgebildet sind, dass sie sich an die Längsachse (y) des Gleitelements (20) in Reaktion darauf annähern, dass das Gleitelement (20) in Richtung zu der zweiten Lage, die entfernt zu der Düse (10) ist, gleitet.

2. Verteiler nach Anspruch 1, wobei der Aktuator (16) ein Gewindestift ist, der mit dem Gleitelement (20) derart in Eingriff tritt, dass das Gleitelement (20) ausgebildet ist, sich in Reaktion auf eine Drehung des Gewindestifts um die Längsachse (y) entlang der Längsachse (y) axial zu verschieben.

3. Verteiler nach Anspruch 1, wobei der Aktuator (16) ein Stab ist, der entlang der Längsachse (y) verschiebbar ist und der mit dem Gleitelement (20) verbunden ist, derart, dass das Gleitelement (20) ausgebildet ist, sich in Reaktion auf eine Verschiebung des Stabs entlang der Längsachse (y) entlang der Längsachse (y) axial zu verschieben.

4. Verteiler nach Anspruch 3, wobei der Stab derart ausgebildet ist, dass seine Bewegung mittels mechanischer Stoppelemente und/oder durch Reibung verstellbar ist.

5. Verteiler nach einem der vorhergehenden Ansprüche, wobei die Düse (10) mindestens ein Halteelement (14) aufweist, das innerhalb des Außenrahmens (12) ausgebildet ist, wobei das mindestens eine Halteelement (14) den Aktuator (16) in der Mitte der Düse (10) beweglich hält.

6. Verteiler nach einem der vorhergehenden Ansprüche, wobei die mehreren Klappen (18) derart angeordnet sind, dass mindestens zwei Schwingungsachsen (x) zueinander einen spitzen Winkel bilden.

7. Verteiler nach Anspruch 6, der drei Klappen (18) aufweist, die derart angeordnet sind, dass die jeweiligen Schwingungsachsen (x) im Wesentlichen ein Dreieck bilden.

8. Verteiler nach einem der Ansprüche 1 bis 5, der zwei Paare aus Klappen (18) aufweist, die derart angeordnet sind, dass die Schwingungsachsen (x) eines gleichen Paars aus Klappen (18) zueinander parallel und senkrecht zu den Schwingungsachsen (x) des anderen Paars aus Klappen (18) sind.

9. Verteiler nach einem der Ansprüche 5 bis 8, wenn sie von Anspruch 5 abhängig sind, wobei mindestens ein Paar aus Klappen (18) beweglich mit dem mindestens einen Halteelement (14), das in dem Außenrahmen (12) ausgebildet ist, verbunden ist.

10. Verteiler nach einem der vorhergehenden Ansprüche, wobei mindestens ein Paar aus Klappen (18) beweglich mit dem Außenrahmen (12) der Düse (10) verbunden ist.

11. Verteiler nach einem der Ansprüche 5 bis 10, wenn diese abhängig von Anspruch 5 sind, wobei der Außenrahmen (12) eine Kreisform hat und wobei das mindestens eine Halteelement (14) ein Ständer ist, der entlang eines Durchmessers des Außenrahmens (12) verläuft.

12. Verteiler nach einem der vorhergehenden Ansprüche, wobei ein einziger Verbindungsstab (22) zwei oder mehr radial aufeinanderfolgende Klappen (18) steuern kann.

13. Verteiler nach einem der vorhergehenden Ansprüche, wobei der axiale Hub des Gleitelements (20) zwischen 4 mm und 8 mm, vorzugsweise bei 6 mm, liegt.

## Revendications

1. Diffuseur d'air (9) pour véhicules, conçu pour introduire et diriger un flux d'air dans l'habitacle du véhicule, comprenant :
- une buse (10), adaptée à être montée dans la section de sortie d'un conduit d'alimentation en air, ladite buse (10) comprenant un cadre externe (12), qui identifie une section d'évacuation d'air ;
- un actionneur (16), positionné au niveau du centre de ladite section d'évacuation d'air et mobile par rapport à un axe longitudinal (y) ;
- une pluralité de pattes (18), chaque patte (18) ayant un premier bord (18a) près duquel ladite patte (18) est articulée à la buse (10) le long d'un axe d'oscillation respectif (x), les axes d'oscillation (x) d'au moins deux pattes (18) n'étant pas mutuellement parallèles ;
- une coulisse (20), coaxiale par rapport à l'axe longitudinal (y) de l'actionneur (16) et accouplée de façon coulissante audit actionneur (16), de sorte que la coulisse (20) est configurée pour translater axialement entre une première position, proximale à la buse (10), et une seconde position, distale à la buse (10), en réponse au mouvement de l'actionneur (16) ;
**caractérisé en ce qu'**il comprend en outre :
- une pluralité de tiges de raccordement (22), ayant chacune une première extrémité mobile d'un seul tenant avec la coulisse (20), et une seconde extrémité articulée à un second bord (18b) d'une patte respective (18), de sorte que les seconds bords (18b) sont configurés pour s'éloigner de l'axe longitudinal (y) de la coulisse (20) en réponse au coulissement de la coulisse (20) en direction de ladite première position, proximale à la buse (10), et que les seconds bords (18b) sont configurés pour s'approcher de l'axe longitudinal (y) de la coulisse (20) en réponse au coulissement de la coulisse (20) en direction de ladite seconde position, distale à la buse (10).

2. Diffuseur selon la revendication 1, dans lequel l'actionneur (16) est une broche filetée qui vient en prise avec la coulisse (20), de sorte que la coulisse (20) est configurée pour translater axialement le long dudit axe longitudinal (y) en réponse à une rotation de la broche filetée autour de l'axe longitudinal (y).

3. Diffuseur selon la revendication 1, dans lequel l'actionneur (16) est une tige translatable le long de l'axe longitudinal (y) et accouplée à la coulisse (20), de sorte que la coulisse (20) est configurée pour translater axialement le long dudit axe longitudinal (y) en réponse à une translation de la tige le long de l'axe longitudinal (y).

4. Diffuseur selon la revendication 3, dans lequel la tige est configurée de sorte que son mouvement est réglé au moyen de butées mécaniques et/ou par friction.

5. Diffuseur selon l'une quelconque des revendications précédentes, dans lequel la buse (10) comprend au moins un élément de support (14) formé à l'intérieur du cadre externe (12), l'au moins un élément de support (14) supportant de façon mobile l'actionneur (16) au niveau du centre de la buse (10).

6. Diffuseur selon l'une quelconque des revendications précédentes, dans lequel la pluralité de pattes (18) est agencée de sorte qu'au moins deux axes d'oscillation (x) forment mutuellement un angle aigu.

7. Diffuseur selon la revendication 6, comprenant trois pattes (18), agencées de sorte que les axes d'oscillation respectifs (x) forment sensiblement un triangle.

8. Diffuseur selon l'une des revendications 1 à 5, comprenant deux paires de pattes (18), agencées de sorte que les axes d'oscillation (x) d'une même paire de pattes (18) sont mutuellement parallèles, et perpendiculaires aux axes d'oscillation (x) de l'autre paire de pattes (18).

9. Diffuseur selon l'une quelconque des revendications 5 à 8 en fonction de la revendication 5, dans lequel au moins une paire de pattes (18) est articulée à l'au moins un élément de support (14), formé à l'intérieur du cadre externe (12).

10. Diffuseur selon l'une quelconque des revendications précédentes, dans lequel au moins une paire de pattes (18) est articulée au cadre externe (12) de la buse (10).

11. Diffuseur selon l'une quelconque des revendications 5 à 10 en fonction de la revendication 5, dans lequel le cadre externe (12) présente une forme circulaire, et l'au moins un élément de support (14) est un montant s'étendant le long d'un diamètre dudit cadre externe (12).

12. Diffuseur selon l'une quelconque des revendications précédentes, dans lequel une seule tige de raccordement (22) peut commander deux ou plus de deux pattes radialement consécutives (18).

13. Diffuseur selon l'une quelconque des revendications précédentes, dans lequel la course axiale de la coulisse (20) est comprise entre 4 mm et 8 mm, et est de manière préférée de 6 mm.
